# EUROPEAN PATENT APPLICATION

(11) **EP 4 826 675 A1**
(43) Date of publication of application: **21.10.2026**
(21) Application number: 24903686.4
(22) Date of filing: 10.12.2024
(51) Int. Cl.: G06V 10/82, G06T 1/40, G06T 5/60, G06T 7/00

(54) **INFORMATION PROCESSING DEVICE, INFORMATION PROCESSING METHOD, AND PROGRAM**

(30) Priority: 14.12.2023 JP 2023210815; 05.11.2024 JP 2024193479
(71) Applicant: Canon Kabushiki Kaisha, Tokyo 146-8501 (JP)
(72) Inventor: MIZOBE, Hideaki, Tokyo 146-8501 (JP)
(74) Representative: TBK
(86) International application number: PCT/JP2024/043623
(87) International publication number: WO 2025/127032

(57) **Abstract**

An information processing apparatus includes image acquisition means for acquiring a first image of an analysis target, image addition means for inputting the first image to a first machine learning model to acquire a second image in which an image is added to a peripheral region of the first image, the peripheral region being not drawn in the first image, and analysis means for inputting the second image to a second machine learning model to acquire an analysis result of the second image.

## Description

### [TECHNICAL FIELD]

The present invention relates to an information processing apparatus, an information processing method, and a program.

### [BACKGROUND ART]

In recent years, a convolutional neural network (CNN) has been used in application in the image processing field, such as image classification, object detection, and semantic segmentation. CNN is a type of deep learning technique that executes convolutional processing repeatedly, and can perform image processing accurately as disclosed, for example, in NPL 1 and NPL 2.

### [CITATION LIST]

### [NON-PATENT LITERATURE]

[NPL 1] Kaiming He, Xiangyu Zhang, Shaoqing Ren, and Jian Sun: "Deep Residual Learning for Image Recognition", <https://arxiv.org/abs/1512.03385> (published on Dec. 10, 2015)
[NPL 2] Jiahui Yu, Zhe Lin, Jimei Yang, et al.: "Generative Image Inpainting with Contextual Attention", <https://arxiv.org/abs/1801.07892> (published on Jan. 24, 2018)

### [SUMMARY OF INVENTION]

### [TECHNICAL PROBLEM]

However problems are generated due to padding processing (processing for adjusting the size of the output image by supplementing predetermined values around the input image) included in many CNNs. For example, a problem of CNN is that a classification target or a detection target existing in the center portion of an image can be accurately processed, but accuracy drops for a classification target or detection target existing on the edge of the image. This is because data which does not contribute to improving the accuracy is generated in the padding processing or the like, and the generated data is included in the result of the convolutional processing.

The present disclosure provides a technique to reduce a drop in accuracy of analysis processing in a machine learning model to which an analysis target image is inputted.

### [SOLUTION TO PROBLEM]

According to some embodiments, an information processing apparatus includes image acquisition means for acquiring a first image of an analysis target, image addition means for inputting the first image to a first machine learning model to acquire a second image in which an image is added to a peripheral region of the first image, the peripheral region being not drawn in the first image, and analysis means for inputting the second image to a second machine learning model to acquire an analysis result of the second image. According to some embodiments, an information processing apparatus includes image acquisition means for acquiring an image of an analysis target, and analysis means for inputting the image to a machine learning model to acquire an analysis result of the image, wherein the machine learning model generates a feature map which indicates a feature value on an analysis target included in the image, removes a predetermined edge region of the feature map, and outputs the analysis result using the feature map from which the predetermined edge region has been removed. According to some embodiments, an information processing apparatus includes image acquisition means for acquiring a first image of an analysis target, image addition means for acquiring a second image in which an image is added to a peripheral region of the first image, the peripheral region being not drawn in the first image, and analysis means for inputting the second image to a machine learning model to acquire an analysis result of the second image, wherein the machine learning model generates a feature map which indicates a feature value on an analysis target included in the second image, removes a predetermined edge region of the feature map, and outputs the analysis result using the feature map from which the predetermined edge region has been removed.

According to some embodiments, an information processing method includes an image acquisition step of acquiring a first image of an analysis target, an image addition step of inputting the first image to a first machine learning model to acquire a second image in which an image is added to a peripheral region of the first image, the peripheral region being not drawn in the first image, and an analysis step of inputting the second image to a second machine learning model to acquire an analysis result of the second image. According to some embodiments, an information processing method includes an image acquisition step of acquiring an image of an analysis target, and an analysis step of inputting the image to a machine learning model to acquire an analysis result of the image, wherein the machine learning model generates a feature map which indicates a feature value on an analysis target included in the image, removes a predetermined edge region of the feature map, and outputs the analysis result using the feature map from which the predetermined edge region has been removed. According to some embodiments, an information processing method includes an image acquisition step of acquiring a first image of an analysis target, an image addition step of acquiring a second image in which an image is added to a peripheral region of the first image, the peripheral region being not drawn in the first image, and an analysis step of inputting the second image to a machine learning model to acquire an analysis result of the second image, wherein the machine learning model generates a feature map which indicates a feature value on an analysis target included in the second image, removes a predetermined edge region of the feature map, and outputs the analysis result using the feature map from which the predetermined edge region has been removed.

### [ADVANTAGEOUS EFFECTS OF INVENTION]

According to the technique of the present disclosure, a drop in accuracy of the analysis processing in a machine learning model, to which an analysis target image is inputted, can be reduced.

### [BRIEF DESCRIPTION OF DRAWINGS]

[Fig. 1]

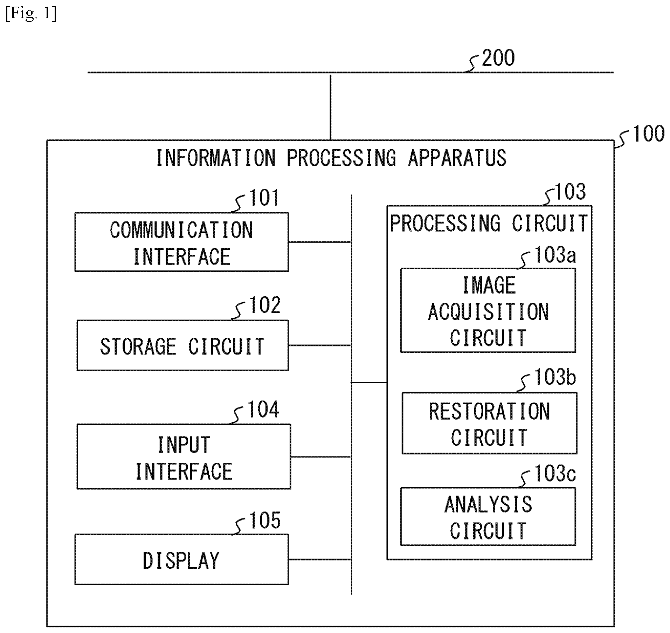

   Fig. 1 is a diagram depicting a configuration of an information processing apparatus according to an embodiment.
[Fig. 2]

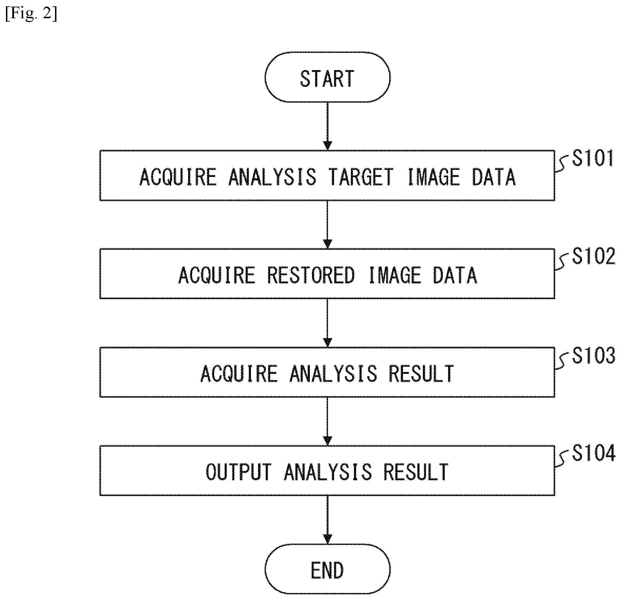

   Fig. 2 is a flow chart of processing executed by the information processing apparatus according to an embodiment.
[Fig. 3]

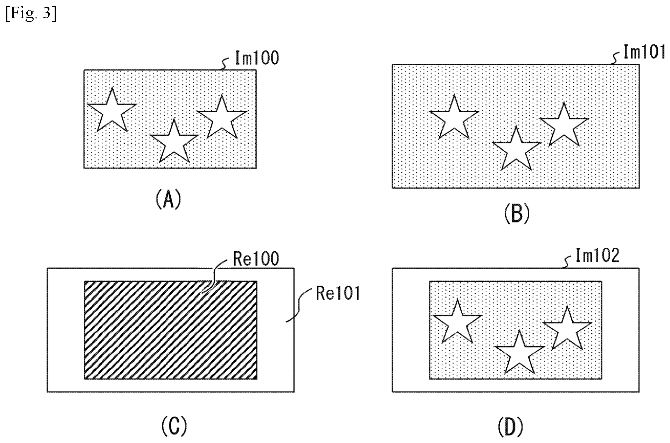

   Figs. 3A to 3D are diagrams depicting a relationship of an analysis target image and a restored image according to an embodiment.
[Fig. 4]

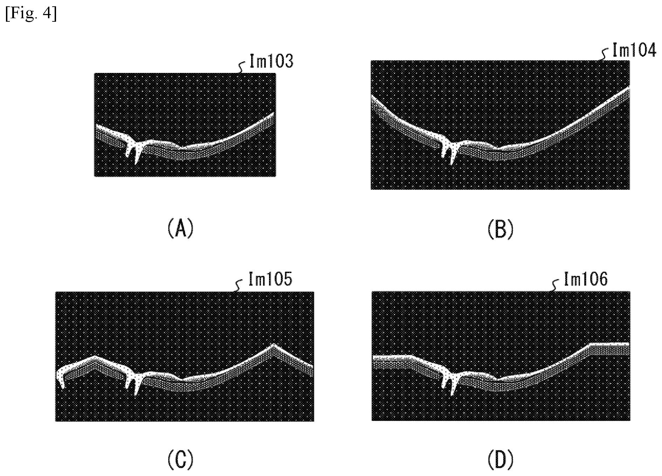

   Figs. 4A to 4D are diagrams indicating restored images according to an embodiment.
[Fig. 5]

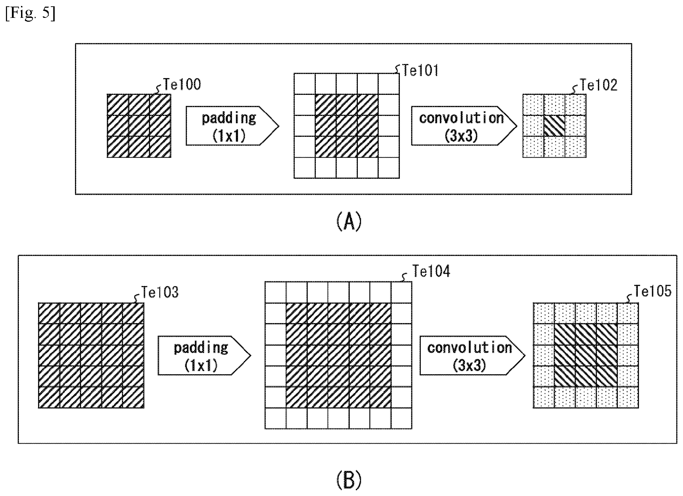

   Figs. 5A and 5B are diagrams for describing an example of padding processing according to an embodiment.
[Fig. 6]

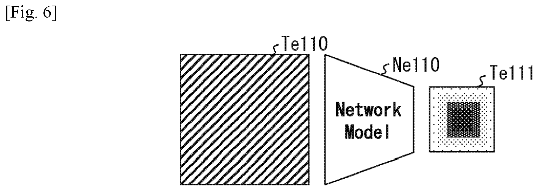

   Fig. 6 is a diagram for describing another example of padding processing according to an embodiment.
[Fig. 7]

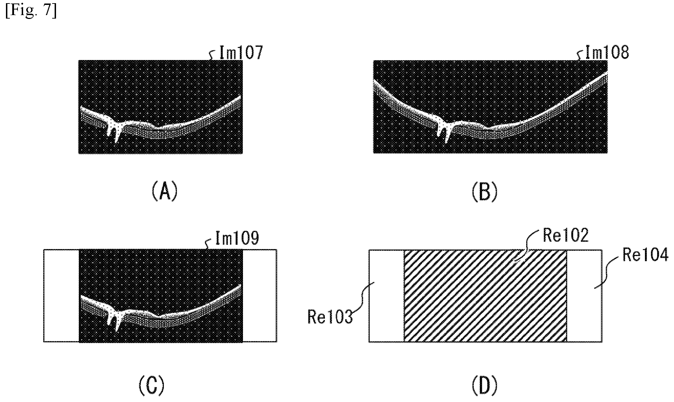

   Figs. 7A to 7D are diagrams depicting a relationship of an analysis target image and a restored image according to an embodiment.
[Fig. 8]

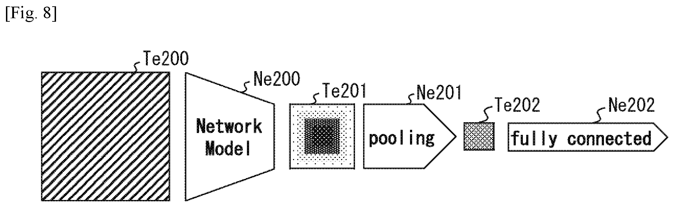

   Fig. 8 is a diagram for describing an example of processing using a classifier of a CNN according to an embodiment.
[Fig. 9]

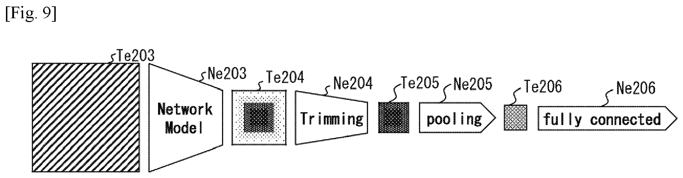

   Fig. 9 is a diagram for describing another example of processing using the classifier of the CNN according to an embodiment.
[Fig. 10]

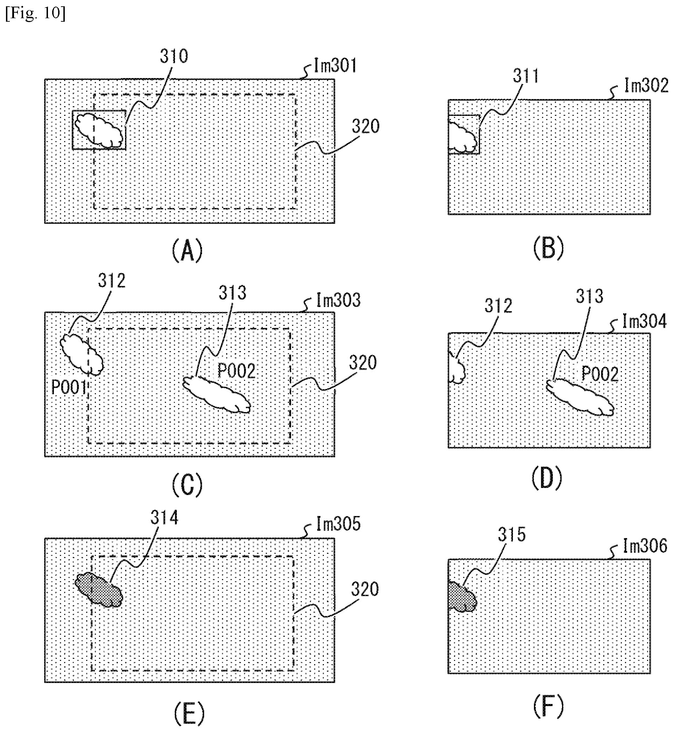

   Figs. 10A to 10F are diagrams depicting trimming processing of a restored image according to an embodiment.

### [DESCRIPTION OF EMBODIMENTS]

Embodiments of the present disclosure will now be described with reference to the drawings. The present disclosure is not limited to the following embodiments, but may be changed if necessary within the scope of not depicting from the spirit thereof. In the drawings to be described in the following, configurations having the same function are denoted with the same reference sign, and reduction description thereof may be omitted or simplified.

Each embodiment and each modification of the information processing apparatus, information processing method and program will be described in detail with reference to the drawings. Each embodiment can be combined with a prior art, another embodiment, or a modification within a scope not generating an inconsistency. In the same manner, each modification may be combined with a prior art, an embodiment, or another modification within a scope not generating an inconsistency. In the following description, the same composing element is denoted with the same reference sign, and redundant description thereof may be omitted.

### (Embodiment 1)

Fig. 1 is a diagram depicting an example of a configuration of an information processing apparatus 100 according to Embodiment 1. The information processing apparatus 100 acquires image data, including an analysis target image, and executes information processing on the image data. The information processing apparatus 100 may display the result of the information processing, save the result of the information processing in association with image data, or output the result of the information processing to an external apparatus. For example, the information processing apparatus 100 may generate data indicating an analysis result on whether an object of interest (analysis target) is drawn in the image data, and display the analysis result on a display device (not illustrated) connected to the information processing apparatus 100. The information processing apparatus 100 is implemented by such computer equipment as a server and a workstation, for example.

The information processing apparatus 100 may be communicably connected to a data management device (not illustrated) via a network 200 or a communication cable or communication circuit (not illustrated), in order to acquire processing target image data or to store the analysis result of image data. The data management device is a device that can store various data (e.g. image data, analysis result of image data), and transmit or receive image data to/from another device (e.g. information processing apparatus 100) that can communicate with the data management device. The data management device may be integrated with the information processing apparatus 100 as one composing element of the information processing apparatus 100.

The type of the image data processed by the information processing apparatus 100 is not especially limited, and medical images captured by various devices may be used as the image data. For example, this apparatus may include a retinal camera, an optical coherence tomography (OCT) imaging device, and a computed tomography (CT) device. This apparatus may also include an ultrasonic diagnostic device, and a magnetic resonance imaging (MRI) device. This apparatus may also include a positron emission tomography (PET) device, and a single photon emission computed tomography (SPECT) device. Further, this apparatus may include a whole slide scanner and the like. Furthermore, photographic images of a person, an animal, an artificial object, scenery, a celestial body, and the like, captured by a digital camera, may be included in the image data of Embodiment 1. Moreover, such images as a document, a business form and a picture read by a document scanner may also be included in the image data of Embodiment 1. The above image data is not limited to two-dimensional data, but may be multi-dimensional image data (e.g. three dimensional image data).

As illustrated in Fig. 1, the information processing apparatus 100 includes a communication interface 101, a storage circuit 102, a processing circuit 103, an input interface 104, and a display 105. The information processing apparatus 100 can be communicably connected to the network 200 via the communication interface 101.

The communication interface 101 is an interface to communicate the image data, the analysis result, or the like with another device. The communication interface 101 is implemented by a network communication interface, such as a network adapter and a network interface controller (NIC). The communication interface 101 may be implemented by such an apparatus communication interface as a universal serial bus (USB), PCI Express, serial ATA (SATA), and M.2.

The storage circuit 102 stores various data and various programs which are used for processing executed by the information processing apparatus 100 according to Embodiment 1. Specifically, the storage circuit 102 is connected to a processing circuit 103, and stores image data and the analysis result based on the control by the processing circuit 103. The storage circuit 102 also has a function of a work memory which temporarily stores various data used for the processing executed by the processing circuit 103. The storage circuit 102 is implemented by a semiconductor memory element, such as a random access memory (RAM) and a flash memory, a hard disk, an optical disk, or the like.

The processing circuit 103 controls operations of the above mentioned units of the information processing apparatus 100. For example, the processing circuit 103 performs various processing in accordance with an instruction received from the user via the input interface 104 connected to the information processing apparatus 100. The processing circuit 103 may also perform various processing in accordance with an instruction received from the user via the communication interface 101. Further, the processing circuit 103 may perform various processing after detecting that image data is stored in the storage circuit 102. The processing circuit 103 is implemented by a central processing unit (CPU), for example.

The processing circuit 103 includes an image acquisition circuit 103a which implements image acquisition means for acquiring an analysis target image, a restoration circuit 103b which implements acquisition means for acquiring a restored image of the acquired image, and an analysis circuit 103c which implements analysis means for performing analysis using the restored image.

Here each processing function implemented by the image acquisition circuit 103a, the restoration circuit 103b and the analysis circuit 103c, which are composing elements of the processing circuit 103 indicated in Fig. 1, is stored in the storage circuit 102 in the format of a program that a computer can execute, for example. The processing circuit 103 reads each program from the storage circuit 102, and executes each program that was read, so as to implement a function corresponding to each program. In other words, the processing circuit 103 that read each program has a function implemented by the image acquisition circuit 103a, the restoration circuit 103b and the analysis circuit 103c. As a result, the image acquisition circuit 103a functions as image acquisition means for acquiring an analysis target image (first image). The restoration circuit 103b functions as image restoration means (image addition means) for inputting an image (first image) into a machine learning model (restoration model), and acquiring a restored image (second image) where an image is added to a peripheral region of the image, which is not drawn in the image (first image). The analysis circuit 103c functions as analysis means for inputting the restored image (second image) into the machine learning model (analysis model), and acquiring the analysis result of the restored image (second image). Adding a plausible image to a peripheral region which is originally not rendered as an image is hereinafter referred to as restoration.

The input interface 104 receives input operation of various instructions and various information from the user of the information processing apparatus 100. Specifically, the input interface 104 is connected to the processing circuit 103, and converts the input operation received from the user into electric signals, and sends the electric signals to the processing circuit 103. For example, the input interface 104 is implemented by a trackball, a switch button, a mouse, a keyboard, and a touch pad, of which operation surface is touched to perform input operation. The input interface 104 may also be implemented by a touch screen, where the display screen and the touch pad are integrated, a non-contact input interface using an optical sensor, a voice input interface, or the like. The input interface 104 is not limited to an interface including such a physical operation component as a mouse and a keyboard. For example, examples of the input interface 104 include an electric signal processing circuit which receives electric signals corresponding to the input operation from an external input equipment, disposed separately from the information processing apparatus 100, and sends the electric signals to the processing circuit 103.

The display 105 displays various data, such as image data processed by the information processing apparatus 100 and data based on the analysis result. Specifically, the display 105 is connected to the processing circuit 103, and displays various data received from the processing circuit 103. For example, the display 105 displays a medical image based on the image data. The display 105 is implemented by a liquid crystal monitor, a cathode ray tube (CRT) monitor, a touch panel, or the like, for example.

The above is description on an example of a configuration of the information processing apparatus 100 according to Embodiment 1. In Embodiment 1, the information processing apparatus 100 executes various types of processing to be described below so as to reduce the influence of the drop in performance of the convolutional neural network (CNN) in an edge region of the analysis target image. In the following, an example of the various types of processing on image data executed by the information processing apparatus 100 will be described. In the following description, it is assumed that the information processing apparatus 100 executes image classification processing for two-dimensional image data, as an example of the analysis processing. However the information processing apparatus 100 may also be configured to perform the same processing on multi-dimensional image data (e.g. three-dimensional image data).

The image classification processing executed by the information processing apparatus 100 is processing to classify an image depending on whether an object of interest (analysis target) is drawn in the image data. Specifically, an image is classified as "Positive" if an analysis target is drawn in the image data, and classified as "Negative" if not (binary classification processing). Another example is a multiple class classification processing where in a case where at least 2 types of objects are drawn in the image data, each image is classified depending on the type of the image. In the following description of Embodiment 1, a case of executing the binary classification will be described as an example to simplify description, but the following description may be applied to the case of executing the multiple class classification processing.

In the following, a restoration model implemented by the restoration circuit 103b, and an analysis model implemented by the analysis circuit 103c in the processing executed by the information processing apparatus 100 according to Embodiment 1, will be described.

The restoration model implemented by the restoration circuit 103b according to Embodiment 1 is an image processing model, applying the machine learning technique, to restore a peripheral region that is not drawn in the inputted image by adding (depicting) an image to the peripheral region. The restoration model achieved by the restoration circuit is a first machine learning model in Embodiment 1. Specifically, as illustrated in Figs. 3A and 3B, the restoration model restores at least a part of the peripheral region of the image by adding (depicting) an image to the part of the peripheral region, based on an image Im100 (first image) to be inputted, and outputs a restored image Im101 (second image). Here, as illustrated in Fig. 3C, the peripheral region to be restored in a region Re100, which corresponds to the entire region of the image Im100, is the portion indicated by a region Re101.

It is preferable that the image of the peripheral region Re101 to be restored is drawn plausibly and continuously from the image data to be inputted to the restoration model. Specifically, a peripheral region (corresponding to the region Re101) restored in the restored image Im101, which corresponds to the image Im100, will be described as an example. The restored image Im101 is preferably an image where the graphics drawn in the image Im100 and the pattern, contour and the like of the background thereof are drawn plausibly and continuously in the peripheral region. For example, it is assumed that an image Im102, illustrated in Fig. 3D, is an image generated by adding a partial image, which is filled with pixels of predetermined pixel values, to the image Im100, as the peripheral region. Compared with this image Im102, the restored image Im101 is preferable since the image Im100 is drawn plausibly and continuously in the peripheral region of the image Im100.

The processing to restore the image of the peripheral region by drawing continuously from the edge portion of the analysis target will be described with reference to Figs. 4A to 4D, using the example of inputting an image data, other than image Im100, to the restoration model. As indicated in Fig. 4A, it is assumed that information processing apparatus 100 generates restored image data from an image Im103, which is an image captured the fundus retinal layer captured by an OCT imaging device. When the image Im103 is inputted to the restoration model implemented by the restoration circuit 103b, a restored image Im104 is outputted. As indicated in Fig. 4B, in the restored image Im104, a continuation of the fundus retinal layer, which is not drawn in the image Im103, is drawn plausibly and continuously in the peripheral region of the image Im103.

For the image processing algorithm included in the restoration model to output the restored image data, a technique on inpainting processing using machine learning, disclosed in NPL 2 is available. The inpainting processing is processing to restore a defective image, in which a part of the image is filled, by replacing the filled portion with a most likely partial image. For example, if the inpainting processing is executed on an image of an old photograph of which part is damaged, the damaged portion is replaced with a likely image, and the damaged image can be restored to a non-damaged image. In Embodiment 1, it is assumed that the inpainting processing is executed on the image Im100 in Fig. 3A, for example. Here the image Im102, where the partial image filled with predetermined pixels values, which corresponds to the filled portion in the inpainting processing, is added to the periphery of the image Im100, is generated. Then the generated image Im102 is inputted to the restoration model which executes the inpainting processing.

Here, it is assumed that the machine learning model to execute the inpainting processing included in the restoration model has been trained with a dataset configured by an image group which is the same type of or simulated to the image that is expected to be inputted to the restoration model. For example, in Embodiment 1, the machine learning model to execute the inpainting processing can be trained using a certain original image data as correct answer data, and inputting image data created by filling the periphery of this original data with a predetermined pixel value.

Even if the image data inputted to the restoration model is originally "Negative", this image data may be classified as "Positive" by mistake and the analysis result may be in error, if an aspect classified as "Positive" is drawn in the restored peripheral region. Therefore the restoration model may be guided and trained so that only the negative aspect is drawn in the peripheral region. For example, only negative images are used for the image constituting the dataset to be used for the training, or the restoration model is trained with providing a penalty if the restoration model outputs an image in which a positive aspect has been drawn, so that a positive aspect is not drawn. By the restoration model being trained to restore the peripheral region like this, so that the aspect causing the analysis result to be in error is not drawn in the peripheral region, it can be prevented that the positive aspect is not drawn in the peripheral region to be restored by the restoration model.

In the case where the image data to be restored by the restoration model is the multi-dimensional (three-dimensional or higher) image data, the peripheral region to be restored is determined in accordance with the dimensionality of the image data. For example, it is assumed that the three-dimensional image data is the analysis target. In this case, compared with the case where the two-dimensional image data is the analysis target, the dimension in the depth direction is considered, and an image, in which the peripheral region corresponding to the front side or the back side has been restored, is outputted from the restoration model.

The restoration model need not always be installed in the information processing apparatus 100, and the restoration circuit 103b may be installed in a restoration device (not illustrated), for example. In this case, the information processing apparatus 100 is connected to the restoration device via the network 200, and sends the image data, including the acquired analysis target image, to the restoration device, so that the later mentioned processing in step S102 is implemented. Further, it is assumed that the information processing apparatus 100 is connected to a data management device (not illustrated), to store configuration data and parameter data related to the restoration model, via the network 200, for example. In this case, the processing circuit 103 may acquire the above mentioned data from the data management device, and reproduce the restoration model in the information processing apparatus 100, so that the later mentioned processing in step S102 is implemented.

The analysis model implemented by the analysis circuit 103c according to Embodiment 1 is a classifier to execute the classification processing by CNN, to which the machine learning technique has been applied, and is a second machine learning model in Embodiment 1. The analysis model performs the padding processing before performing the convolutional processing, so that in at least one convolutional processing, the spatial sizes (width, height) of the input tensor and the output tensor of the convolutional processing do not change. A specific example of the image processing algorithm to perform the classification processing included in the analysis model is the technique related to the classifier using the machine learning disclosed in NPL 1.

In the analysis model, including the classifier using machine learning for the binary classification processing according to Embodiment 1, a number of output nodes of a fully connected layer, which is the final layer of the network model of the classifier, is defined as 1 or 2, for example. In the case of defining the number of output nodes as 1, the analysis model normalizes the output value to a range of at least 0 and not more than 1 using a Sigmoid function, and classifies the image as Negative if the normalized value is less than a predetermined threshold, or as Positive if it is the threshold or more. Here the threshold may be set to 0.5, which is the median value in the range after the normalization, or to a threshold with which verification data in the dataset that trained the classifier can be classified at high precision. In the case of defining the number of output nodes as 2, the analysis model determines that the image is negative if the first output value is larger than the second output value, or as Positive if the second output value is the first output value or more.

It is assumed that the analysis model here has been trained using a dataset configured by an image group which is the same type of or a simulated to the image that is expected to be inputted to the analysis model. The analysis model need not always be installed in the information processing apparatus 100, and the analysis circuit 103c may be installed in an analysis device (not illustrated), for example. In this case, the information processing apparatus 100 is connected to the analysis device via the network 200, and sends the image data, including the acquired restored image, to the analysis device, so that the later mentioned processing in step S103 is implemented. Further, it is assumed that the information processing apparatus 100 is connected to a data management device (not illustrated) to store configuration data and parameter data related to the analysis model via the network 200, for example. In this case, the processing circuit 103 may acquire the above mentioned data from the data management device, and reproduce the analysis model in the information processing apparatus 100, so that the later mentioned processing in step S103 is implemented.

Generally, the classifier employing CNN is often designed such that the padding processing is performed before performing the convolutional processing, so that the spatial sizes of the input tensor and the output tensor of the convolutional processing do not change. One reason for this is that in a network model which requires the residual feature extraction disclosed in NPL 1, the input tensor and the output tensor of the processing block, including the convolutional processing, are added. Another reason is that if the spatial sizes of the tensors change every time the convolutional processing is performed, interpolation processing, which negatively affects the accuracy, is required for pooling processing and tensor connection processing.

Further, a fixed value (e.g. 0) is often set for a pixel value of a pixel in the padding region in the padding processing. This will be described concretely with reference to Figs. 5A, 5B and 6. As indicated in Fig. 5A, it is assumed that convolutional processing, of which kernel size is 3 × 3 (width × height) is performed on a tensor Te100, which is a feature map indicating the feature value of the analysis target included in the restored image. The feature value of the analysis target is a value outputted from each module constituting the network model, and this value is expressed by a tensor, for example.

Here, a tensor Te101, where 1 × 1 padding processing (one pixel added vertically and horizontally) is performed on the tensor Te100, is generated so that the spatial size of the tensor Te102 after the convolutional processing becomes the same as the tensor Te100. Then the generated tensor Te101 is inputted for the convolutional processing. Here, a fixed value is often set for a pixel in the peripheral region in the tensor Te101, but this fixed value is a value that is set regardless the state of the original tensor Te100.

For the edge region of the tensor Te102, which is influenced by the fixed value, a feature value which is effective for improving the accuracy, may not be calculated, compared with the center region. Further, in the case of performing the convolutional processing for a plurality of times, the pixels of the tensor influenced by the fixed value influence the adjacent pixels by the convolutional processing. Therefore, the influence of the fixed value spreads its range from the edge of the tensor toward the center by a repeat of the convolutional processing.

Here, the tensor Te102, and a tensor Te105 acquired by performing the convolutional processing on a tensor Te103, which has a larger spatial size than the tensor Te100, will be compared. In this case, the influence of the fixed value used in the padding processing becomes relatively smaller in the tensor Te105 having a larger spatial size, compared with the tensor Te102. Specifically, a degree of influence of the fixed value used in the padding processing, with respect to the spatial size, can be calculated by "(a number of pixels influenced by the fixed value) / (spatial size)". For example, the degree of influence of the fixed value in the tensor Te102 in Fig. 5A is 8 / 9 = about 89%, and the degree of influence of the fixed value in the tensor Te105 in Fig. 5B is 16 / 25 = 64%. Therefore, the degree of influence of the fixed value used in the padding processing becomes relatively smaller as the spatial size of the tensor is larger.

In the example as illustrated in Fig. 6, the tensor Te110, which is an analysis target image, is inputted to a network model Ne110, that is a feature extractor which repeats the convolutional processing and the pooling processing, and an output tensor Te111 is acquired. In this example, the center region of the tensor Te111, which is acquired as the output of the network model Ne110, includes a feature value (the dark portion in Fig. 6), which has no influence or has relatively little influence of the fixed value used in the padding processing, and has high quality which contributes to improving the accuracy of the analysis model. The edge region of the tensor Te111, on the other hand, is a region which was repeatedly subject to the influence of the fixed value used in the padding processing, and includes a feature value (the light portion in Fig. 6) which has low quality, and contributes little to the improvement of the accuracy of the analysis. This means that one method for acquiring a highly accurate analysis result in the machine learning model, including a network model which repeats the convolutional processing and the pooling processing, is utilizing a feature value which has little influence of the fixed value used in the padding processing.

The size of the peripheral region in the restored image, which is restored by the restoration model, may be determined exploratorily so as to increase the accuracy of the analysis model, for example. The size of the peripheral region in the restored image, which is restored by the restoration model, may be determined by a different method. For example, the size of the peripheral region may be determined such that the influence of the fixed value, which is set for the padding region in the padding processing executed by a network model related to the analysis model, does not reach a predetermined range of the tensor outputted by the network model related to the analysis model. The predetermined range here may be a range including approximate center coordinates of the tensor, or a range corresponding to the size of the analysis target image, transformed at the same ratio as the ratio used when transforming the spatial size of the restored image into the spatial size of this tensor, for example.

The size of the peripheral region in the restored image, which is restored by the restoration model, can be determined in accordance with the condition of the calculation cost, which is allowed in the execution environment of Embodiment 1, for example. The calculation cost, which is influenced by the size of the peripheral region to be restored by the restoration model and is changed thereby, is in particular the calculation cost of the processing for the restoration model to restore the peripheral region, and the calculation cost of the processing for the analysis model to analyze the inputted restored image data. Generally, as the peripheral region to be restored by the restoration model increases, both the calculation cost of the processing for the restoration model to restore the peripheral region and the calculation cost of the processing for the analysis model to analyze the inputted restored image data increase, but the accuracy of the analysis model tends to be higher. On the other hand, as the peripheral region to be restored by the restoration model decreases, both the calculation cost of the processing for the restoration model to restore the peripheral region and the calculation cost of the processing for the analysis model to analyze the inputted restored image data decrease, but the accuracy of the analysis model tends to be lower. In other words, the accuracy of the analysis model becomes closer to the accuracy of the analysis model of the conventional technique.

Fig. 2 is a flow chart indicating an example of a flow of processing executed by the information processing apparatus 100 according to Embodiment 1. In Embodiment 1, in a state where the analysis target image data has been stored in the storage circuit 102, the user instructs the start of operation using the input interface 104, whereby the processing circuit 103 starts the processing in Fig. 2, for example. In the following, each step of the flow chart in Fig. 2 will be described sequentially.

In step S101, the image acquisition circuit 103a acquires the analysis target image data stored in the storage circuit 102.

In step S102, the restoration circuit 103b inputs the analysis target image data, which was acquired in step S101, to the restoration model, and acquires the restored image data where the peripheral region of the analysis target image has been restored.

In step S103, the analysis circuit 103c inputs the restored image data, which was acquired in step S102, to the analysis model, and acquires the result of the classification processing, outputted from the analysis model, as the analysis result.

In step S104, the analysis circuit 103c outputs the analysis result of the restored image data, which was outputted from the analysis model in step S103, to the display 105. Thereby the analysis result using the analysis target image is displayed on the display 105. The analysis result may be outputted from the information processing apparatus 100 to the data management device (not illustrated) as data, via the network 200, or a communication cable or a communication circuit (not illustrated). In the case of outputting the analysis result of the restored image data as data, the analysis result need not be outputted to the display 105.

As described above, the information processing apparatus 100 according to Embodiment 1 can generate the analysis result of the restored image data, where the peripheral region of the analysis target image has been restored. By the restoration of the peripheral region of the analysis target image, the restored image data becomes an image that is larger than the analysis target image data. Thereby, in the image data to indicate the feature value of the analysis target image data, which is outputted from the network model included in the analysis model, the degree of influence of the fixed value used in the padding processing becomes relatively small. As a result, a drop in the classification performance in the edge portion of the image, caused by the padding processing of the CNN, can be prevented. Further, by using the restored image where the peripheral region has been restored, the state of the edge portion of the image data that is missed can be prevented, hence an improvement in the accuracy of the analysis result can be expected.

Next, modifications (Modifications 1 and 2) of the above mentioned processing of the information processing apparatus 100 according to Embodiment 1 will be described. In the following description, a configuration or processing the same as the information processing apparatus 100 described above will be denoted with the same reference sign, and detailed description thereof will be omitted.

### (Modification 1)

In Embodiment 1, the restoration circuit 103b of the information processing apparatus 100 generates the restored image using the region of the top, bottom, left and right of the analysis target image Im100 as the restoration region, as the region Re 101 indicated in Fig. 3C. As shown in Figs. 7C and 7D, in Modification 1, on the other hand, only a part of the peripheral region of the analysis target image, such as only the left and right regions Re103 and Re104 (excluding the top and bottom regions), of the analysis target image Im107, may be restored. Thereby according to Modification 1, the data size of the restored image can be reduced compared with the restored image generated in Embodiment 1 described above.

According to the information processing apparatus 100 of Modification 1, the calculation cost can be reduced compared with the analysis processing of Embodiment 1, since the size of the restored image data is small. Further, in some cases, it is already known that the analysis target is not drawn in the region that is not the restoration target (e.g. the top and bottom peripheral regions of the image Im107 in Fig. 7A). In this case, a part of the peripheral region is not included in the restoration target, thereby the calculation cost due to analysis processing can be reduced, and the acquisition of the classification result, of which accuracy is equivalent to that of the analysis processing in Embodiment 1, can be expected.

### (Modification 2)

In Modification 2, the size of the peripheral region, which is restored by the restoration model implemented by the restoration circuit 103b, is changed. Thereby the calculation cost related to the restoration processing of the restoration model, and the calculation cost related to the subsequent analysis processing of the analysis model implemented by the analysis circuit 103c, can be adjusted. Further, by changing the size of the peripheral region to be restored by the restoration model, the accuracy of the analysis result to be outputted from the analysis model can be adjusted.

For example, an administrator of the information processing apparatus 100 according to Modification 2 may store a default value, of the size of the peripheral region of the image to be restored by the restoration model, in the storage circuit 102, and read the value when the processing in Fig. 2 is executed, so as to adjust the calculation cost and the accuracy of the analysis result. Further, for example, the user of the information processing apparatus 100 according to Modification 2 may operate the input interface 104 before starting the processing in Fig. 2, so as to change the size of the peripheral region to be restored by the restoration model.

According to Modification 2, compared with the processing of the information processing apparatus 100 according to Embodiment 1, the balance between the calculation cost and the accuracy of the analysis result is adjusted, and a more preferable execution mode of the analysis processing by the information processing apparatus 100 can be implemented.

### (Embodiment 2)

An example of a configuration and processing of an information processing apparatus according to Embodiment 2 will be described next. In the following description, a configuration, processing or the like of the information processing apparatus the same as Embodiment 1 will be denoted with the same reference sign, and detailed description thereof will be omitted.

An analysis model implemented by the analysis circuit 103c of the information processing apparatus 100 according to Embodiment 2 is a classifier that executes the classification processing by the CNN using a machine learning technique, just like Embodiment 1. A difference of the information processing apparatus 100 according to Embodiment 2 from Embodiment 1 is that a feature tensor, which indicates a feature value of an image outputted from a network model included in the classifier, is trimmed. Specifically, the trimming processing is performed to remove a predetermined edge region of the feature tensor before being inputted to a fully connected layer, which is the final layer of the network model included in the classifier, or a pooling layer corresponding to this fully connected layer. Therefore, the influence of the fixed value used in the padding processing, which is executed by the network model, can be reduced.

A commonly used classifier employing CNN will be described first with reference to Fig. 8. In the commonly used classifier employing CNN, a tensor Te200, which corresponds to a classification target image, is inputted to a network model Ne200, which is a feature extractor. The tensor Te200 is processed through a convolution layer, a pooling layer and the like, included in the network model Ne200, and is outputted from the network model Ne200 as a tensor Te201. The tensor Te201 is then processed through the pooling layer Ne201, and is transformed into a tensor Te202 having a shape that can be inputted to a fully connected layer Ne202. Then in the fully connected layer Ne202, the tensor Te202 is processed by the linear regression method, so that the values for a number of output nodes defined in the fully connected layer Ne202 are outputted. Here the tensor Te201 includes the influence of the fixed value used in the padding processing related to the convolution layer included in the network model Ne200, and in some cases, the analysis target extracted in the edge portion of the image data may not be classified as "Positive". This may drop the performance of the analysis model.

A network model, that is, a classifier included in an analysis model which is implemented by the analysis circuit 103c according to Embodiment 2, will be described next with reference to Fig. 9. In the network model included in the analysis model, a tensor Te203, which corresponds to a restored image where the peripheral region of the classification target image has been restored, is inputted to a network model Ne203, which is the feature extractor. The tensor Te203 is then processed through a convolution layer, a pooling layer and the like, included in the network model Ne203, and is outputted from the network model Ne203, as a tensor Te204. The tensor Te204 is trimmed according to the shape of an image, which is set in advance based on an image region to be influenced by the fixed value used in the padding processing caused by the network structure of the network model Ne203. By this trimming processing, a tensor Te205 is generated. The tensor Te205 is then processed through the pooling layer Ne205, and is transformed to a tensor Te206 having a shape that can be inputted to a fully connected layer Ne206. Then in the fully connected layer Ne206, the tensor Te206 is processed by the linear regression method, so that values for a number of output nodes defined in the fully connected layer Ne206 are outputted.

Here the region influenced by the fixed value in the tensor Te204 can be determined on the basis of the network structure of the network model Ne203. Specifically, the region influenced by the fixed value can be determined on the basis of the padding size in the padding processing by the network model Ne203, the kernel size related to the convolutional processing, and a number of times of executing the convolutional processing, for example. Instead of this, or in addition to this, the region influenced by the fixed value may also be determined by the processing content and the sequence to transfer the padding region to the tensor in the padding processing, such as the pooling processing and scaling processing of the tensor. In other words, the edge region influenced by the fixed value used in the padding processing is removed from the tensor, and an image having a feature value, which is calculated from the pixel values of the trimmed image, is inputted to the pooling layer Ne205.

Depending on the spatial size of the tensor Te203 to be inputted to the network model Ne203 and a number of times of convolutional processing and pooling processing by the network model Ne203, the fixed value used in the padding processing influence all the pixels of the tensor Te205. In this case, a region, other than a region corresponding to a predetermined spatial size (which was searched to maximize precision when the classifier of the analysis mode is trained), may be regarded as the edge region and be trimmed, for example. Alternatively, it may be calculated how many times the fixed value used in the padding processing influences each pixel constituting the tensor Te205, and a region where the influence of the fixed value is received for a predetermined times or more, may be regarded as the edge region and be trimmed, for example. Alternatively, the size of the peripheral region to be restored by the restoration model, which is implemented by the restoration circuit 103b of Embodiment 2, may be increased, so as to prevent the state where all pixels of the tensor Te205 will be influenced by the fixed value used in the padding processing, for example.

The flow of an example of the processing executed by the information processing apparatus 100 of Embodiment 2 is the same as Embodiment 1, hence detailed description thereof will be omitted here. The information processing apparatus 100 according to Embodiment 2 can acquire the analysis result of the analysis target image as described above. Particularly, a characteristic of Embodiment 2 is that the trimming processing is executed on the basis of the region influenced by the fixed value used in the padding processing, for the feature tensor calculated by the network model included in the analysis model. Thereby, compared with Embodiment 1, a drop in performance of the analysis processing in the edge portion of the image caused by the padding processing by the CNN can be further prevented, since the region influenced by the fixed value used in the padding processing is removed as the edge region.

Next, modifications (Modifications 3, 4 and 5) of the above mentioned processing of the information processing apparatus 100 according to Embodiment 2 will be described. In the following description, a configuration or processing the same as the configuration or processing of the information processing apparatus 100 described above will be denoted with the same reference sign, and detailed description thereof will be omitted.

### (Modification 3)

In Modification 3, in the trimming processing of the tensor executed by the network model included in the analysis model implemented by the analysis circuit 103c, the size of the trimmed edge region of the tensor is changed. Thereby the calculation cost and accuracy of the network model included in the analysis model can be adjusted, without entirely removing the influence of the fixed value used in the padding processing in the convolution layer of the network model.

According to Modification 3, in the information processing apparatus 100, the balance between the calculation cost and accuracy of the analysis result is adjusted, and a more preferable execution mode can be implemented compared with the information processing apparatus 100 of Embodiment 2 described above.

### (Modification 4)

According to Modification 4, acquisition of the restored image data by the restoration model implemented by the restoration circuit 103b is skipped, and the analysis target image data is directly inputted to the analysis model implemented by the analysis circuit 103c.

Compared with the processing of Embodiment 2 described above, the following processing is different in a series of processing executed by the information processing apparatus 100 according to Modification 4. That is, the processing in step S102 is omitted, and the information processing apparatus 100 advances processing to step S103 when the processing in step S101 completes. In step S103, the analysis circuit 103c inputs the analysis target image data acquired in step S101, instead of the restored image data, to the analysis model, and acquires the result of classification processing by the analysis model, as the analysis result.

According to Modification 4, the information processing apparatus 100 does not execute the output processing of the restored image by the restoration model, and the analysis target image, of which size is smaller than the restored image, is inputted to the analysis model. Thereby the calculation cost can be reduced compared with the processing executed by the information processing apparatus 100 of Embodiment 2 described above. Further, according to Modification 4, the tensor outputted from the network model included in the analysis mode is trimmed, whereby the influence of the fixed value used in the padding processing related to the convolutional layer can be reduced.

### (Modification 5)

In Modification 5, a rule-based image processing algorithm, for example, is used for the image processing algorithm included in the restoration model implemented by the restoration circuit 103b. Examples of the rule-based image processing algorithm are known algorithm of the reflection padding processing, symmetric padding processing, and replication padding processing.

Specifically, in the case of the image Im103 indicated in Fig. 4A, a restored image Im105 can be generated by the reflection padding processing, or a restored image Im106 can be generated by replication padding processing.

Compared with the restored image Im104, which is an output example of the restoration model described above, an image of the peripheral region is restored in the above restored image data such that the fundus retinal layer drawn in the image Im103 is suddenly bent, as indicated in the drawings. Thus, the image of the peripheral region is not naturally drawn in a continuous manner, and becomes an unnatural OCT image. The accuracy of the classification processing by the analysis model may drop in this way, but depending on the feature of the analysis model, the accuracy drop may be minor or not generated at all.

For example, it is assumed that the analysis model has been trained to classify the presence of edema of the fundus retinal layer, and an OCT image of the fundus retinal layer, such as the image Im103 indicated in Fig. 4A, is inputted to the restoration model. In this case, if an edema is no drawn in the OCT image, a new edema is not drawn in the peripheral region by the rule-based image processing algorithm mentioned above. Therefore, even if an image, in which the peripheral region has been restored, is inputted to the analysis model, the analysis model does not output the classification result indicating the presence of edema. In a case where edema is drawn in the OCT image, on the other hand, the state of edema may be drawn in the peripheral region by the rule-based image processing algorithm. However even if the image where the peripheral region has been restored like this is inputted to the analysis model, the analysis model outputs the classification result indicating the presence of edema. Since the classification result by the analysis model becomes the same between the OCT image and the restored image, no problem is generated.

However it is still possible that an analysis model, of which accuracy is insufficient, may output an incorrect classification result due to a portion, which is drawn as if the fundus retinal layer is bent, in the peripheral region of the restored image. To reduce the possibility of outputting an incorrect classification result, the analysis model may be trained using image data generated with the above mentioned image processing algorithm. In other words, a dataset may be constructed to train the analysis model so as to output a correct classification result of the image data, even if the fundus retinal layer is drawn bent, not continuously in a natural manner, in the peripheral region due to the image processing algorithm.

Thereby compared with the processing executed by the information processing apparatus 100 of Embodiment 2 described above, the calculation cost, generated by changing the image processing algorithm related to the processing of the restoration model, can be adjusted, and a step of providing the restoration model by machine learning can be skipped.

### (Embodiment 3)

An example of a configuration and processing of an information processing apparatus according to Embodiment 3 will be described next. In the following description, a configuration, processing or the like of the information processing apparatus the same as Embodiment 1 will be denoted with the same reference sign, and detailed description thereof will be omitted.

An example of image generation processing of two-dimensional image data, executed by the information processing apparatus 100 according to Embodiment 3, will be described. The processing of Embodiment 3 may be easily applicable to multi-dimensional image data (e.g. three-dimensional image data), and may be interpreted as processing for multi-dimensional image data if necessary.

The image generation processing executed by the information processing apparatus 100 in Embodiment 3 is processing to generate a new analysis target image based on the image acquired in step S101. For example, this image generation processing is segmentation processing, where graphics drawn in the image data and analysis target regions, such as lesions, are separated by different colors. This image generation processing is, for example, domain transforming processing to transform image data captured in a certain modality into an image as if the image data were captured in a different modality. This image generation processing is also, for example, an image quality enhancement processing to remove noise and artifacts drawn in the image data. In Embodiment 3, in the various types of image generation processing mentioned above, the accuracy of the classification processing by the analysis model may drop in the edge region of the generated image, due to the padding processing by the CNN.

The analysis model implemented by the analysis circuit 103c according to Embodiment 3 is an image generator, which executes the image generation processing by the CNN, applying a machine learning technique. This analysis model performs the padding processing before performing the convolutional processing in at least one convolution processing, so that the spatial sizes (width, height) of the input tensor and the output tensor do not change. For the image processing algorithm to perform the image generation processing included in the analysis model, a technique related to an image generator based on machine learning may be used.

In the case where the image generation processing of the analysis model is the segmentation processing, the analysis model processes the image or tensor, outputted by the CNN, in accordance with the condition of the segmentation processing. Specifically, it is assumed that a binary segmentation processing, where graphics and lesions drawn in the image to be inputted to the analysis model are in the foreground and the other portions are in the background, will be executed. Here it is also assumed that the output data, which is an image or a tensor outputted by the CNN related to the analysis model, is data having 1 channel of information. In this case, the pixel value of each pixel of the output image is normalized to a value in a range of at least 0 and not more than1 by Sigmoid function, for example, and the pixel is processed as the background pixel if the normalized value is less than a predetermined threshold, and is processed as the foreground pixel if the normalized value is the threshold or more. In addition, 0.5, which is the median value of the value range after the normalization, may be set for the threshold, or a threshold with which the image of the verification data in the dataset, generated by training the image generator, can be generated most accurately, may be set. Alternatively, it is assumed that the output data, which is an image or a tensor outputted by the CNN related to the analysis model, is data having 2 channels of information. In this case, the image is classified as "Negative" if the output value of the first channel is larger than the output value of the second channel, and is classified as "Positive" if the output value of the second channel is the output value of the first channel or more.

In the case where the image generation processing of the analysis model is the image quality enhancement processing, the analysis model can normalize the pixel values of the image or the tensor outputted by the CNN using a number of channels, and pixel value range of the image to be inputted to the analysis model.

It is assumed that the analysis model has been trained using a dataset constituted of an image group that is the same type of the image to be inputted, or an image group simulating the image to be inputted. In the case of training the analysis model by the supervised learning, correct answer data which is expected to be outputted from the analysis model, corresponding to each of the images constituting the dataset, may be included in the dataset.

The processing executed by the information processing apparatus 100 according to Embodiment 3 is the same as Embodiment 1. The processing executed by the information processing apparatus 100 according to Embodiment 3 will now be described in accordance with the steps of the flow chart in Fig. 2. The steps not specifically described here are the same as Embodiment 1.

In step S103, the analysis circuit 103c inputs the restored image data to the analysis model and acquires the image generation result by the analysis model, as the analysis result. Thereby the information processing apparatus 100 according to Embodiment 3 can acquire the analysis result of the restored image in which the peripheral region of the analysis target image has been restored. By using the restored image in which the peripheral region of the analysis target image has been restored, the restored image becomes bigger than the analysis target image. Therefore, an image larger than the analysis target image is acquired as the analysis result by the analysis model. Further, the accuracy of the analysis processing improves in a region where a drop in accuracy of the analysis processing and other problems are concerned (that is, a region corresponding to the edge region of the analysis target image), due to the influence of the fixed value used in the padding processing in the network model included in the analysis model.

Next, modifications (Modifications 6 and 7) of the above mentioned processing of the information processing apparatus 100 according to Embodiment 3 will be described. In the following description, a configuration or processing the same as the configuration or processing of the information processing apparatus 100 described above will be denoted with the same reference sign, and detailed description thereof will be omitted.

### (Modification 6)

In Modification 6, the analysis model implemented by the analysis circuit 103c performs the trimming processing on the image acquired by the above mentioned image generation processing, so as to acquire a smaller sized image. Hence the analysis model can perform the classification processing for the image generation result based on the image trimmed to the same size as the analysis target image. In other words, a predetermined edge region that is removed by the analysis model matches with the peripheral region restored in the restored image. By performing the classification processing using the image trimmed like this, the correspondence of the pixel coordinates between the analysis target image and analysis result image can be more clearly recognized.

### (Modification 7)

In Modification 7, the size of the peripheral region restored by the restoration model, which is implemented by the restoration circuit 103b, is adjusted. Thereby the calculation cost related to the processing of the restoration model and the calculation cost of the processing of the analysis model implemented by the analysis circuit 103c in the subsequent step, can be adjusted, and the accuracy and image size of the analysis result by the analysis model can be adjusted.

Therefore compared with the information processing apparatus 100 according to Embodiment 3 described above, the information processing apparatus 100 according to Modification 7 can more appropriately adjust the balance between the calculation cost and accuracy of the analysis result, and can perform analysis that is more appropriate for the execution environment.

### (Embodiment 4)

An example of a configuration and processing of an information processing apparatus according to Embodiment 4 will be described next. In the following description, a configuration, processing or the like of the information processing apparatus the same as Embodiment 1 will be denoted with the same reference sign, and detailed description thereof will be omitted.

An example of the image generation processing of two-dimensional image data, executed by the information processing apparatus 100 according to Embodiment 4, will be described. The processing of Embodiment 4 may be easily applicable to multi-dimensional image data (e.g. three-dimensional image data), and may be interpreted as processing for multi-dimensional image data if necessary.

The object detection processing according to Embodiment 4 is processing to specify a position of the analysis target drawn in the image. In the object detection processing, each analysis target object specified in the image is enclosed by a bounding box, an identifier to identify the type of the object is attached to the object, or a region occupied by each object is mask imaged. The mask imaging is also called "instance segmentation processing". Since an indicator indicating an object, such as a bounding box, an identifier and a mask image, is included in the image of the analysis result, the user can more easily specify the position of the object. However even in the object detection processing, the analysis accuracy may drop at the edge portion of the analysis target image due to the padding processing by the CNN, just like the case of the classification processing.

The analysis model implemented by the analysis circuit 103c according to Embodiment 4 is an object detector that executes the object detection processing by the CNN applying a machine learning technique. This analysis model performs the padding processing before performing the convolutional processing in at least one convolutional processing step, so that the spatial sizes (width, height) of the input tensor and the output tensor in the convolutional processing do not change. An example of the image processing algorithm to perform the object detection processing, included in the analysis model, is a technique related to the object detector using machine learning.

The processing executed by the information processing apparatus 100 according to Embodiment 4 is similar to Embodiment 1. The processing executed by the information processing apparatus 100 according to Embodiment 4 will now be described in accordance with the steps of the flow chart in Fig. 2. The steps not specifically described here are the same as Embodiment 1.

In step S103, the analysis circuit 103c inputs the restored image data to the analysis model, and acquires the result of the above mentioned object detection processing by the analysis model, as the analysis result. Thereby the information processing apparatus 100 according to Embodiment 4 can acquire the analysis result of the restored image in which the peripheral region of the analysis target image has been restored. By using the restored image in which the peripheral region of the analysis target image has been restored, the restored image becomes bigger than the analysis target image. Therefore an object detection result based on an image in a range wider than the analysis target image is acquired as the analysis result by the analysis model. Further, the accuracy of the analysis processing improves in a region where a drop in accuracy of the analysis processing and other problems are concerned (that is, a region corresponding to the edge region of the analysis target image), due to the influence of the fixed value used in the padding processing by the network model included in the analysis model.

A modification (Modification 8) of the above mentioned processing of the information processing apparatus 100 according to Embodiment 4 will be described next. In the following description, a configuration or processing the same as the configuration or processing of the information processing apparatus 100 described above will be denoted with the same reference sign, and detailed description thereof will be omitted.

### (Modification 8)

In Modification 8, the analysis model implemented by the analysis circuit 103c performs the trimming processing on the image acquired as the object detection result, so as to output a smaller sized image as the analysis result.

Specifically, the analysis model changes the trimming processing in accordance with the content of the object detection processing. Thereby the analysis model performs analysis on an image which has been corrected such that the indicator does not overlap with a predetermined edge region. For example, it is assumed that the object detection processing is a processing that encloses an object in the image with a bounding box. In this case, the analysis model decreases the size of a bounding box of which part is outside of the image acquired by the trimming processing, so that the bounding box comes to within the image. In a case where an area or volume of a bounding box is less than a predetermined size, the analysis model may remove this bounding box. Further, it is assumed that the object detection processing is processing to attach an identifier to identify a type of an object drawn in the image. In this case, if the object corresponding to the identifier does not come to within the image acquired by the trimming processing, the analysis model may remove this identifier. Further, it is assumed that the object detection processing is processing to attach a mask image to an object drawn in the image by the instance segmentation processing. In this case, the analysis model may trim a mask image of which part is outside of the image acquired by the trimming processing. In a case where an area of volume of a mask image is less than a predetermined size, the analysis model may remove this mask image.

An example of the above mentioned trimming processing is illustrated in Figs. 10A to 10F. Fig. 10A indicates an image Im301 before the trimming processing. In the image Im301, a bounding box 310 enclosing an object drawn in the image is indicated. For the purpose of explanation, a boundary 320 of which edge region, which will be trimmed by the trimming processing, is indicated in the image Im301 by a dotted line (this dotted line is not actually displayed in the image Im301). The region outside of the boundary 320 is an example of the edge region. By this trimming processing on the image Im301, an image Im302 indicated in Fig. 10B is generated. As illustrated in Fig. 10B, a part of the object drawn in the image Im301 is drawn in the image Im302. In this case, in the image Im302, the bounding box 310 in the image Im301 is corrected to a bounding box 311 enclosing the object.

Fig. 10C indicates an image Im303 before performing the trimming processing. Two objects 312 and 313 are drawn on the image Im303. Identifiers "P001" and "P002" are attached respectively to the objects 312 and 313. For the purpose of explanation, the boundary 320 of the edge region, which will be trimmed by the trimming processing, is indicated in the image Im303 by a dotted line (this dotted line is not actually displayed in the image Im303). The region outside of the boundary 320 is an example of the edge region. By this trimming processing on the image Im303, an image Im304 indicated in Fig. 10D is generated. As illustrated in Fig. 10D, the object 312 does not come to within the image in the image Im304, and only a part of the object 312 is drawn. In this case, in the image Im304, the identifier "P001", which corresponds to this object 312 and does not come to within the image, is removed.

Fig. 10E indicates an image Im305 before performing the trimming processing. A mask image 314 that covers the object is used on the image Im305. For the purpose of explanation, the boundary 320 of the edge region, which will be trimmed by the trimming processing, is indicated in the image Im305 by a dotted line (this dotted line is not actually displayed in the image Im305). The region outside of the boundary 320 is an example of the edge region. By this trimming processing on the image Im305, an image Im306, indicated in Fig. 10E, is generated. As illustrated in Fig. 10E, a part of the object, which is drawn in the image Im305, is drawn in the image Im306. In this case, in the image Im306, the mask image 314 in the image Im305 is corrected to a mask image 315 which covers the object.

In the above trimming processing, the trimming processing may be adjusted so that the size of the image to be acquired as the object detection result becomes the same size as the analysis target image. Then the correspondence of the pixel coordinates between the analysis target image and the analysis result image can be more clearly recognized.

### (Other Embodiments)

The processing of the information processing apparatus 100 is not limited to the above-described embodiments and modifications, and may be implemented in various different embodiments. For example, the information processing apparatus 100 may execute, on multi-dimensional image data, processing similar to the various kinds of processing executed on the above-described two-dimensional image data.

In addition, each component of each illustrated apparatus is functionally conceptual and does not necessarily need to be physically configured as illustrated. That is, the specific form of distribution and integration of each apparatus is not limited to the illustrated ones, and all or a part thereof can be configured by being functionally or physically distributed and integrated in arbitrary units according to various loads, usage conditions, and the like. Furthermore, all or any part of each processing function performed in each apparatus may be realized by a CPU and a program analyzed and executed by the CPU, or may be realized as hardware by wired logic.

Further, among the respective processes described in the above embodiments, all or a part of the processes described as being performed automatically may be performed manually, or all or a part of the processes described as being performed manually may be performed automatically by a known method. In addition, the processing procedures, control procedures, specific names, and information including various data and parameters shown in the above-described document and drawings can be arbitrarily changed unless otherwise specified.

Moreover, the methods described in the embodiments can be realized by executing a previously prepared program on a computer such as a personal computer or a workstation. This program can be distributed via a network such as the Internet. In addition, this control program may be recorded on a non-transitory computer-readable recording medium such as a hard disk, a floppy disk (FD), a CD-ROM, a magneto-optical disk (MO), or a DVD, and may be read from the recording medium and executed by the computer.

While certain embodiments have been described, these embodiments have been presented by way of example only, and are not intended to limit the scope of the invention. Indeed, these embodiments may be embodied in a variety of other forms; furthermore, various omissions, substitutions, changes, and combinations of the embodiments may be made without departing from the spirit of the invention. These embodiments and modifications thereof are included in the scope and spirit of the invention, as well as in the invention recited in the claims and equivalents thereof.

In addition, the disclosed technology may take the form of an embodiment as, for example, a system, an apparatus, a method, a program, or a recording medium (storage medium). Specifically, it may be applied to a system including a plurality of devices (for example, a host computer, an interface device, an imaging apparatus, a web application, and the like), or may be applied to an apparatus including a single device.

The present invention supplies a program that causes a computer to execute each step of the image processing method according to the above-described embodiments to a system or an apparatus via a network or a storage medium. Such a program is configured to be read and executed by one or more processors in the computer of the system or the apparatus. Furthermore, it can also be realized by a circuit (e.g., an ASIC) that realizes one or more functions.

The present invention is not limited to the embodiment described above, and various modifications and amendments may be implemented thereon without departing from the spirit and scope of the present invention. Accordingly, the following claims are attached in order to publicize the scope of the present invention.

This application claims the benefits of Japanese Patent Application No. 2023-210815, filed December 14, 2023, and of Japanese Patent Application No. 2024-193479, filed November 5, 2024, which are hereby incorporated by reference herein in their entirety.

### [Reference Signs List]

100 information processing apparatus, 103 processing circuit, 103a image acquisition circuit, 103b restoration circuit, 103c analysis circuit

## Claims

1. An information processing apparatus, comprising:
image acquisition means for acquiring a first image of an analysis target;
image addition means for inputting the first image to a first machine learning model to acquire a second image in which an image is added to a peripheral region of the first image, the peripheral region being not drawn in the first image; and
analysis means for inputting the second image to a second machine learning model to acquire an analysis result of the second image.

2. The information processing apparatus according to claim 1, wherein
the first machine learning model adds an image to a part of the peripheral region of the first image.

3. The information processing apparatus according to claim 1 or 2, wherein
the second machine learning model generates a feature map which indicates a feature value on an analysis target included in the second image, removes a predetermined edge region of the feature map, and outputs the analysis result using the feature map from which the predetermined edge region has been removed.

4. The information processing apparatus according to claim 3, wherein
the second machine learning model includes a network model to output the feature map which indicates the feature value on the analysis target included in the second image.

5. The information processing apparatus according to claim 4, wherein
the second machine learning model inputs the feature map, from which the predetermined edge region has been removed, to a fully connected layer or a pooling layer corresponding to the fully connected layer, and outputs the analysis result.

6. The information processing apparatus according to any one of claims 1 to 5, wherein
the second machine learning model removes a predetermined edge region in accordance with the first image acquired in the image acquisition means, from an image indicating the analysis result.

7. The information processing apparatus according to claim 6, wherein
the predetermined edge region removed by the second machine learning model matches with the peripheral region to which the image has been added in the second image.

8. The information processing apparatus according to any one of claims 1 to 7, wherein
in a case where the analysis result includes an indicator to indicate an object positioned in a predetermined edge region of the second image, the second machine learning model corrects the indicator to not overlap with the predetermined edge region, and then outputs the analysis result.

9. The information processing apparatus according to claim 8, wherein
the predetermined edge region of the second image matches with the peripheral region to which the image has been added in the second image.

10. The information processing apparatus according to claim 8 or 9, wherein
the indicator is a bounding box enclosing the object, or an identifier of the object, or a mask image overlapping with the object.

11. The information processing apparatus according to any one of claims 1 to 10, wherein
the first machine learning model has been learned to add an image to the peripheral region so that an aspect causing an error of the analysis result is not drawn in the peripheral region.

12. An information processing apparatus, comprising:
image acquisition means for acquiring an image of an analysis target; and
analysis means for inputting the image to a machine learning model to acquire an analysis result of the image, wherein
the machine learning model generates a feature map which indicates a feature value on an analysis target included in the image, removes a predetermined edge region of the feature map, and outputs the analysis result using the feature map from which the predetermined edge region has been removed.

13. An information processing apparatus, comprising:
image acquisition means for acquiring a first image of an analysis target;
image addition means for acquiring a second image in which an image is added to a peripheral region of the first image, the peripheral region being not drawn in the first image; and
analysis means for inputting the second image to a machine learning model to acquire an analysis result of the second image, wherein
the machine learning model generates a feature map which indicates a feature value on an analysis target included in the second image, removes a predetermined edge region of the feature map, and outputs the analysis result using the feature map from which the predetermined edge region has been removed.

14. The information processing apparatus according to claim 1 or 13, wherein the image added to the peripheral region is an image in which an aspect depicted in the first image is depicted plausibly and continuously in the peripheral region.

15. An information processing method, comprising:
an image acquisition step of acquiring a first image of an analysis target;
an image addition step of inputting the first image to a first machine learning model to acquire a second image in which an image is added to a peripheral region of the first image, the peripheral region being not drawn in the first image; and
an analysis step of inputting the second image to a second machine learning model to acquire an analysis result of the second image.

16. An information processing method, comprising:
an image acquisition step of acquiring an image of an analysis target; and
an analysis step of inputting the image to a machine learning model to acquire an analysis result of the image, wherein
the machine learning model generates a feature map which indicates a feature value on an analysis target included in the image, removes a predetermined edge region of the feature map, and outputs the analysis result using the feature map from which the predetermined edge region has been removed.

17. An information processing method, comprising:
an image acquisition step of acquiring a first image of an analysis target;
an image addition step of acquiring a second image in which an image is added to a peripheral region of the first image, the peripheral region being not drawn in the first image; and
an analysis step of inputting the second image to a machine learning model to acquire an analysis result of the second image, wherein
the machine learning model generates a feature map which indicates a feature value on an analysis target included in the second image, removes a predetermined edge region of the feature map, and outputs the analysis result using the feature map from which the predetermined edge region has been removed.

18. A program for causing a computer to execute each step of the information processing method according to any one of claims 15 to 17.
